# DEMANDE DE BREVET EUROPEEN

(11) **EP 1 074 425 A1**
(43) Date de publication de la demande: **07.02.2001**
(21) Numéro de dépôt: 00402151.5
(22) Date de dépôt: 27.07.2000
(51) Int. Cl.: B60N 2/02

(54) **Dispositif pour la transmission de signaux entre une unité de contrôle et de commande d'un véhicule automobile et un équipement monté sur un sous-ensemble de celui-ci**

(30) Priorité: 06.08.1999 FR 9910256
(71) Demandeur: Renault, 92100 Boulogne Billancourt (FR)
(72) Inventeur: Cannoni, Jean-Pierre, 92500 Rueil Malmaison (FR); Legall, Claire, 92500 Rueil Malmaison (FR); Maurice, Christian, 78470 Saint Remy les Chevreuses (FR)

(57) **Abrégé**

Dispositif pour la transmission de signaux entre une unité de contrôle et de commande (3) d'un véhicule et au moins un équipement monté sur un sous-ensemble (12), tel que notamment un siège (12) démontable de véhicule automobile, de façon à commander ledit équipement appartenant à ce sous-ensemble (12), ledit sous-ensemble (12) étant, en configuration d'utilisation, verrouillé dans deux rails parallèles (4,6,5,7,8,10,9,11) montés sur un élément de structure du véhicule, notamment un plancher, et conformés de manière à autoriser, au moyen d'un mécanisme de verrouillage, l'installation du sous-ensemble (12) en une position quelconque souhaitée le long des rails (4,6,5,7,8,10,9,11), caractérisé en ce qu'il comprend des moyens émetteurs de signaux (13,15,16,21,23) connectés à l'unité de contrôle et de commande (3), des moyens récepteurs de signaux (15,16,22,24) prévus sur le sous-ensemble (12) connectés audit équipement, des moyens d'alimentation (13,15,16,25,26) pour alimenter ledit équipement en énergie, et en ce que la transmission des signaux entre l'unité de contrôle et de commande (3) et l'équipement, et l'alimentation en énergie de l'équipement sont assurées de façon permanente quels que soient les déplacements du sous-ensemble (12) par rapport à l'élément de structure, une fois le sous-ensemble (12) verrouillé sur les rails (4,6,5,7,8,10,9,11).

## Description

La présente invention concerne un dispositif pour la transmission de signaux entre une unité de contrôle et de commande d'un véhicule et au moins un équipement monté sur un sous-ensemble.

Plus précisément, elle concerne un dispositif pour la transmission de signaux entre une unité de contrôle et de commande d'un véhicule et au moins un équipement monté sur un sous-ensemble, tel que notamment un siège démontable de véhicule automobile, de façon à commander ledit équipement appartenant à ce sous-ensemble, ledit sous-ensemble étant, en configuration d'utilisation, verrouillé dans deux rails parallèles montés sur un élément de structure du véhicule, notamment un plancher, et conformés de manière à autoriser, au moyen d'un mécanisme de verrouillage, l'installation du sous-ensemble en une position quelconque souhaitée le long des rails.

Les véhicules du type monospace peuvent comporter des sièges amovibles, typiquement les sièges arrière, susceptibles de se déplacer sur de grandes distances au moyen de rails placés sur le plancher du véhicule.

Ces sièges doivent alors comporter dans leur structure propre des éléments, tels que les ceintures de sécurité, afin que, dans n'importe quelle configuration, la sécurité de leur occupant soit assurée.

Afin d'augmenter encore davantage l'efficacité de ces ceintures de sécurité, la plupart des constructeurs automobiles joignent à celles-ci un prétentionneur qui permet, en cas de choc du véhicule, de resserrer la ceinture de sécurité autour de l'occupant d'un siège du véhicule, afin d'éviter que celui-ci, dans le cas où la ceinture serait lâche, ne subisse des accélérations trop violentes.

Le prétentionneur est relié à une unité de commande située sur le véhicule qui est adaptée pour détecter la venue d'un choc et commander, alors, son déclenchement. Le siège équipé du prétentionneur doit donc être relié à une source d'alimentation électrique ainsi qu'à divers circuits de transport d'informations permettant, entre autre, à l'unité de commande de diagnostiquer le bon état du prétentionneur.

Or, actuellement, les sièges de véhicule pouvant effectuer de grands déplacements le long de rails ne sont pas connectés au circuit électrique principal du véhicule. En effet, la grande mobilité de ces sièges empêche l'utilisation de systèmes de connexion habituellement utilisés pour les sièges à mobilité réduite et qui consistent par exemple en de simples connecteurs terminant des torons de câbles et fils électriques, assemblés manuellement lors du montage du siège sur le plancher, ou bien des connecteurs qui s'enclenchent automatiquement lors de ce même montage.

La demanderesse, dans la publication FR97-12275, décrit un dispositif pour la transmission de signaux entre le système de commande d'un véhicule automobile et un équipement de sécurité situé sur un siège amovible. Ce dispositif comprend une anode montée dans au moins un rail dans lequel le siège coulisse qui coopère avec une anode fixée sur le siège, les deux éléments étant séparés par un espace déterminé. L'anode est reliée à un élévateur de tension piloté par l'unité de commande. Un signal émis par cette unité provoque la mise de l'anode sous une tension élevée susceptible de créer un arc dans l'espace entre l'anode et la cathode permettant de déclencher l'équipement de sécurité du siège.

Le dispositif décrit dans cette publication permet la transmission de signaux de façon ponctuelle à un siège amovible. Toutefois, certains équipements pouvant être montés sur un siège amovible nécessitent une alimentation en énergie de façon permanente, ou, d'une manière générale, un échange permanent de signaux entre le siège et une unité montée sur le véhicule.

La présente invention vise à permettre l'alimentation et la commande de façon permanente d'un équipement d'un siège monté sur des rails quelle que soit la position du siège le long des rails.

Dans ce but, elle propose un dispositif pour la transmission de signaux entre une unité de contrôle et de commande d'un véhicule et au moins un équipement monté sur un sous-ensemble, tel que notamment un siège démontable de véhicule automobile, de façon à commander ledit équipement appartenant à ce sous-ensemble, ledit sous-ensemble étant, en configuration d'utilisation, verrouillé dans deux rails parallèles montés sur un élément de structure du véhicule, notamment un plancher, et conformés de manière à autoriser, au moyen d'un mécanisme de verrouillage, l'installation du sous-ensemble en une position quelconque souhaitée le long des rails, caractérisé en ce qu'il comprend des moyens émetteurs de signaux connectés à l'unité de contrôle et de commande, des moyens récepteurs de signaux prévus sur le sous-ensemble connectés audit équipement, des moyens d'alimentation pour alimenter ledit équipement en énergie, et en ce que la transmission des signaux entre l'unité de commande et l'équipement, et l'alimentation en énergie de l'équipement sont assurées de façon permanente quels que soient les déplacements du sous-ensemble par rapport à l'élément de structure, une fois le sous-ensemble verrouillé sur les rails.

Selon une autre caractéristique de l'invention, les moyens émetteurs de signaux et les moyens d'alimentation comportent au moins un élément principal de connecteur, et les moyens récepteurs de signaux et les moyens d'alimentation comportent au moins un élément complémentaire porté par le sous-ensemble, ledit élément principal de connecteur étant connecté audit élément complémentaire pendant le verrouillage du sous-ensemble sur les rails.

Selon une autre caractéristique de l'invention, les moyens émetteurs de signaux et les moyens d'alimentation comportent au moins plusieurs éléments principaux de connecteur, ledit élément complémentaire étant adapté pour coopérer avec un unique élément principal de connecteur, quels que soient les déplacements du sous-ensemble par rapport à l'élément de structure, une fois celui-ci verrouillé sur les rails.

Selon une autre caractéristique de l'invention, l'élément principal de connecteur est monté sur au moins l'un des rails et s'étend sur toute la longueur de celui-ci.

Selon une autre caractéristique de l'invention, les moyens émetteurs de signaux comportent un premier émetteur/récepteur de radiofréquences relié à une première antenne, et les moyens récepteurs de signaux comportent un deuxième émetteur/récepteur de radiofréquences, relié à une deuxième antenne, monté sur le sous-ensemble, et adapté pour échanger des signaux avec ledit premier émetteur/récepteur.

Selon une autre caractéristique de l'invention, les moyens d'alimentation comportent au moins un élément principal de connecteur monté sur au moins l'un des rails et s'étendant sur toute la longueur de celui-ci, et un élément complémentaire de connecteur porté par le sous-ensemble, ledit élément principal de connecteur étant connecté audit élément complémentaire pendant le verrouillage du sous-ensemble sur les rails.

Selon une autre caractéristique de l'invention, les moyens d'alimentation comportent une pile montée sur ledit sous-ensemble.

Selon une autre caractéristique de l'invention, les moyens d'alimentation comportent au moins une troisième antenne principale montée sur au moins l'un des rails et s'étendant sur toute la longueur de celui-ci, et une quatrième antenne complémentaire montée sur le sous-ensemble, ladite antenne principale coopérant avec ladite antenne secondaire une fois le sous-ensemble verrouillé sur les rails, et étant adaptée pour transmettre de l'énergie par voie des radiofréquences, à ladite antenne secondaire.

D'autres caractéristiques et avantages de l'invention apparaîtront à la lecture de la description qui va suivre de cinq modes de réalisation de la présente invention en référence aux dessins dans lesquels :
- la figure 1 représente, de façon schématique, vue de dessus la disposition des sièges d'un véhicule,
- la figure 2 est une vue schématique simplifiée d'un agencement pour le raccordement automatique de deux circuits électriques selon un premier mode de réalisation de l'invention,
- la figure 3 est une vue schématique simplifiée d'un même agencement selon un second mode de réalisation de l'invention,
- la figure 4 est une vue schématique simplifiée d'un même agencement, selon un troisième mode de réalisation de l'invention,
- la figure 5 est une vue schématique simplifiée d'un même agencement, selon un quatrième mode de réalisation de l'invention.

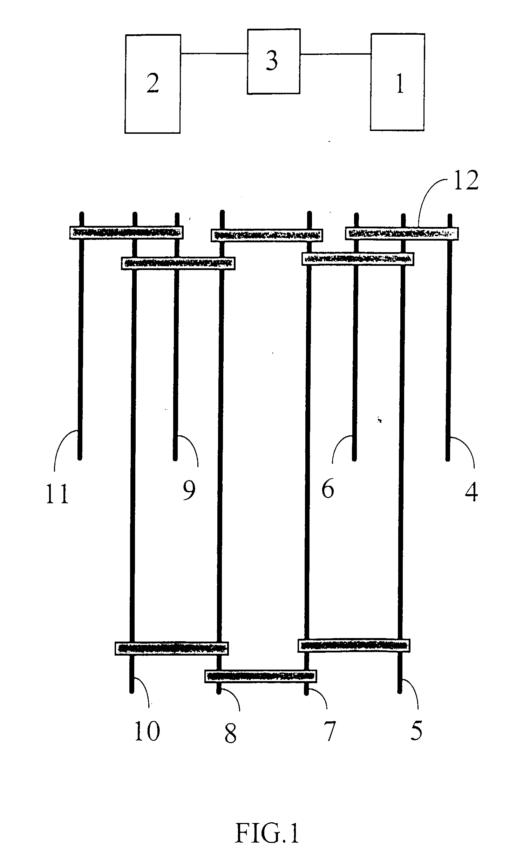

On a représenté sur la figure 1 une vue de dessus simplifiée de l'intérieur d'un véhicule automobile de type monospace. Face au poste de conduite (non représenté), sont montés deux sièges 1,2, un siège conducteur 2 et un siège passager 1. Ces sièges peuvent, de façon connue, être équipés de glissières venant coulisser dans des rails fixés sur le plancher.

Ces sièges 1,2 peuvent être équipés d'un circuit électrique auxiliaire pouvant alimenter différents équipements comme, par exemple, un prétentionneur. Habituellement, le siège 1,2 à raccorder au circuit principal comporte un toron de câbles et fils électriques qui se termine par un élément auxiliaire de connecteur qui est prévu pour être accouplé à un élément principal de connecteur complémentaire agencé lui aussi à l'extrémité libre d'un toron électrique appartenant au circuit électrique principal du véhicule.

Les câbles et fils électriques sont mis de façon suffisamment lâches pour autoriser des déplacements relativement faibles des sièges passager 1, et conducteur 2. Le circuit électrique principal du véhicule est relié à une unité de commande et de détection 3, qui, par exemple en cas de choc, provoque le déclenchement des prétentionneurs équipant les sièges passager 1 et conducteur 2.

Le plancher du véhicule comporte huit rails 4,5,6,7,8,9,10,11, parallèles. Les sièges arrière 12 sont adaptés pour venir s'enclencher et coulisser sur les rails 4,5,6,7,8,9,10,11. Un siège 12 particulier est guidé par deux rails. La figure 1 représente les différentes combinaisons de sièges arrière 12 envisageables. Ainsi, il peut y avoir deux rangées de sièges arrière, la première rangée, la plus proche des sièges passager 1 et conducteur 2 peut comporter jusqu'à trois sièges arrière, deux montés sur les couples latéraux de rails 4,6 et 9,11, et un monté sur le couple central de rail 7,8. L'espace disponible dans le compartiment passager du véhicule peut limiter la longueur des couples latéraux de rail 4,6 et 9,11. La première rangée peut comporter deux sièges qui seront alors placés préférentiellement sur les couples de rails intermédiaires 5,7 et 8,10 afin de disposer au niveau de chaque siège 12 du maximum de place possible. De la disposition des rails 4,5,6,7,8,9,10,11, représentée sur la figure 1, ressort que chacun des deux rails 7,8, qui forme le couple central de rail, participe à un couple de rails intermédiaires.

Le véhicule peut disposer aussi d'une deuxième rangée de sièges arrière 12. Cette rangée peut comporter deux sièges qui sont alors placés sur les deux couples de rails intermédiaires 5,7 et 8,10, ou bien un seul siège arrière 12 qui est alors préférentiellement sur le couple central de rail 7,8 afin de disposer, au niveau du siège 12, du maximum d'espace possible.

Un siège arrière 12 monté sur un couple de rails peut coulisser sur toute la longueur de rail, dans le cas où, bien entendu, un autre siège arrière 12, correspondant à une autre rangée, n'est pas monté sur le même rail. De plus, chaque siège 12 peut être monté orienté de façon à ce que son occupant fasse face au poste de conduite, ou bien être monté dans une position inverse, son occupant tournant le dos au poste de conduite.

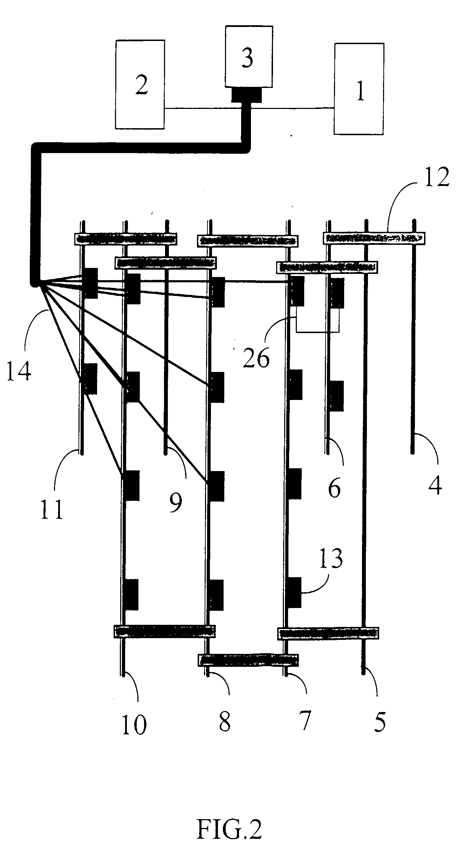

Un premier mode de réalisation de l'invention est représenté sur la figure 2. Certains rails 6,7,8,10,11 sont équipés de bornes de connexion 13, régulièrement espacées sur chacun d'eux. Les bornes de connexion 13 sont réparties de façon à ce qu'au moins un rail 6,7,8,10,11 de chaque couple de rails soit équipé de bornes de connexion 13.

Chaque borne de connexion 13 est reliée par un câble de connexion 14 à l'unité de commande et de détection 3. Une borne de connexion 13 peut comprendre plusieurs connexions, chacune pouvant assurer la transmission de signaux de nature différente, par exemple, la présence du siège 12, la transmission d'énergie, la transmission de signaux de commande, etc... Chaque siège est équipé d'un élément de connexion auxiliaire (non représenté). Cet élément complémentaire de connexion est réalisé de sorte que, quelle que soit la position du siège 12 sur un couple de rails, l'élément complémentaire de connexion soit enclenché avec une unique borne de connexion 13.

Le siège 13 peut ne comporter qu'un élément complémentaire de connexion. Sur la figure 2, cet élément complémentaire de connexion devra être situé sur le côté gauche du siège 13. Pour assurer alors un raccordement du siège 13 en position normale, c'est-à-dire lorsque son occupant fait face au poste de conduite, les rails 6,7,8,10,11 doivent être équipés de borne de connexion 13.

Ainsi, lorsqu'un siège 13 est retiré d'un couple de rails pour être monté à un autre endroit sur le même couple de rails ou sur un autre couple de rails, une connexion sera établie au moment de l'enclenchement du siège. De même, lorsqu'un siège 13 est déplacé, tout en restant monté sur un même couple de rails, la connexion passe de façon continue d'une borne de connexion 13 à une autre. Toutefois, dans cette configuration, la connexion n'est pas assurée lorsque le siège est monté en position dos au poste de conduite.

Si l'on veut assurer une connexion quelle que soit l'orientation du siège 12, les couples de rails latéraux 4,6 et 9,11, ainsi que les couples de rails intermédiaires 5,7 et 8,10 peuvent ne comporter des bornes de connexion 13 que sur un rail, respectivement les rails 6,7, et alors, chaque siège 12 comporte deux éléments de connexion complémentaires situés symétriquement sur le siège 12. A tout moment un élément complémentaire de connexion est connecté à une unique borne de connexion quelle que soit la position et l'orientation du siège 12 sur les couples de rails.

Afin de simplifier le réseau de câbles électroniques 14, il est possible de coupler certaines bornes de connexion 13 ensemble, au lieu de les relier directement à l'unité de commande et de détection 3. En effet, il ne peut pas y avoir, au même moment, des sièges 12, sur une première rangée, sur les couples de rails 4,6 et 5,7. Ainsi les bornes de connexion 13, équipant ces deux couples de rails 4,6 et 5,7, et situées à proximité des sièges avant 1,2 peuvent-elles être reliées entre elles puisqu'elles ne seront jamais connectées en même temps à un siège 12. Ce même principe peut s'appliquer pour les bornes de connexion 13, situées au niveau de la première rangée, pour les couples de rails 8,10 et 9,11.

Ce premier mode de réalisation requiert une unité de commande et de détection comportant autant de liaisons qu'il y a de connexions assurées par chaque borne de connexion 13.

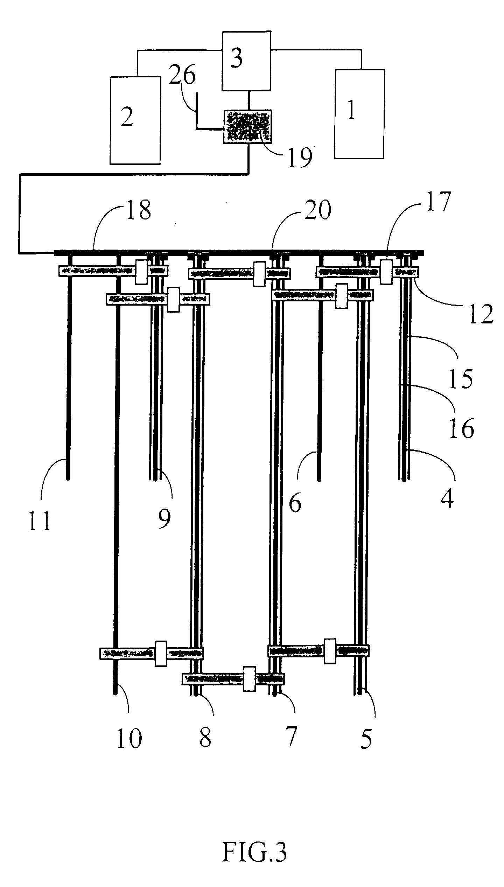

Un deuxième mode de réalisation de l'invention est représenté sur la figure 3. Dans ce mode de réalisation, certains rails 4,5,7,8,9 sont équipés de connexions 15,16 sur toute leur longueur, qui peuvent être réalisées par un système de pistes parallèles 15,16 longeant le rail sur toute sa longueur. Sur la figure 3, les pistes parallèles sont schématisées longeant les deux bords latéraux des rails 4,5,7,8,9. Il est toutefois possible, suivant le nombre de connexions à réaliser, de rassembler les pistes parallèles sur un seul côté du rail, voire sur la base du rail.

Les sièges arrière 12 sont équipés d'éléments de connexion complémentaires (non représenté) qui coopèrent avec les pistes 15,16 quelle que soit la position du siège 12 sur le rail. Ces éléments de connexion peuvent présenter un encombrement beaucoup plus réduit que dans le cas du premier mode de réalisation. De façon analogue au premier mode de réalisation, le nombre d'éléments de connexion complémentaire montés sur le siège 12, et le nombre de rails équipés de pistes de connexion 15,16 peut varier selon que l'on souhaite qu'une connexion soit établie quelle que soit l'orientation du siège 12, face au poste de conduite ou dos au poste de conduite.

Les pistes de connexion 15,16 des rails 4,5,7,8,9 sont connectées à un raccord commun 18 par des connecteurs de raccordement 20, le raccord commun 18 est lui-même relié à l'unité de commande et de détection 3 par l'intermédiaire d'une interface électronique 19. Cette unité d'interface électronique 19 permet de gérer les signaux émis par l'unité de commande et de détection 3 et de les répartir sur les pistes 15,16 appropriées. Certaines pistes peuvent être dédiées à l'alimentation électrique des sièges, cette alimentation étant réalisée par une source d'énergie 26 reliée à l'interface électronique 19.

L'unité de commande et de détection 3, par rapport au premier mode de réalisation, est de conception plus simple puisqu'elle ne requiert qu'une connexion supplémentaire lui permettant d'être relié au raccord commun 18.

Chaque siège 12 comprend un module électronique 17 qui gère les signaux reçus au niveau des pistes de connexion 15,16, et commande, en conséquence, les différents équipements du siège 12, comme, par exemple, le prétentionneur.

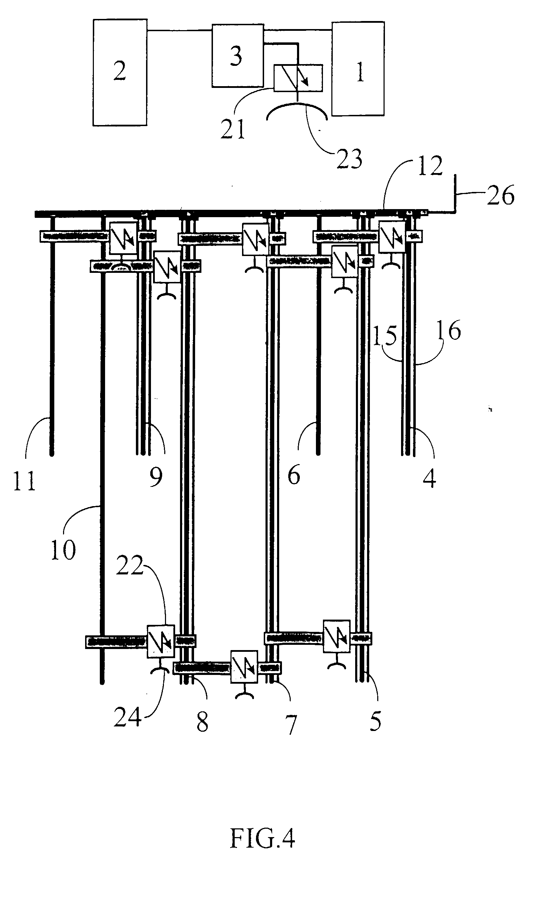

Un troisième mode de réalisation de l'invention est représenté sur la figure 4. Dans ce mode de réalisation, certains rails sont équipés de pistes de connexion 15,16 assurant exclusivement l'alimentation du siège 12 en énergie fournie par la source d'énergie 26. Ces pistes de connexion sont adaptées pour coopérer avec un élément complémentaire de connexion (non représenté) équipant le siège 12. Les différentes commandes sont modulées et émises à partir de l'unité de commande et de détection 3 au moyen d'un émetteur/récepteur 21 relié à une antenne 23. Les signaux émis par cet émetteur/récepteur 21 sont susceptibles d'être reçus par une antenne 24, située sur chaque siège 12, et reliée à un émetteur/récepteur 22, qui démodule les signaux reçus et les transmet aux différents équipements intégrés au siège 12.

L'unité de commande et de détection 3 est, à son tour, susceptible de recevoir des signaux issus des émetteurs/récepteurs 22, équipant les sièges 12, qui lui permettent, par exemple, de diagnostiquer la présence et l'état de chaque siège 12. L'unité de commande et de détection 3 peut, dans ce mode de réalisation, être de conception classique par rapport aux unités de commande et de détection 3 habituellement utilisées pour gérer les sièges avant 1,2, d'un véhicule.

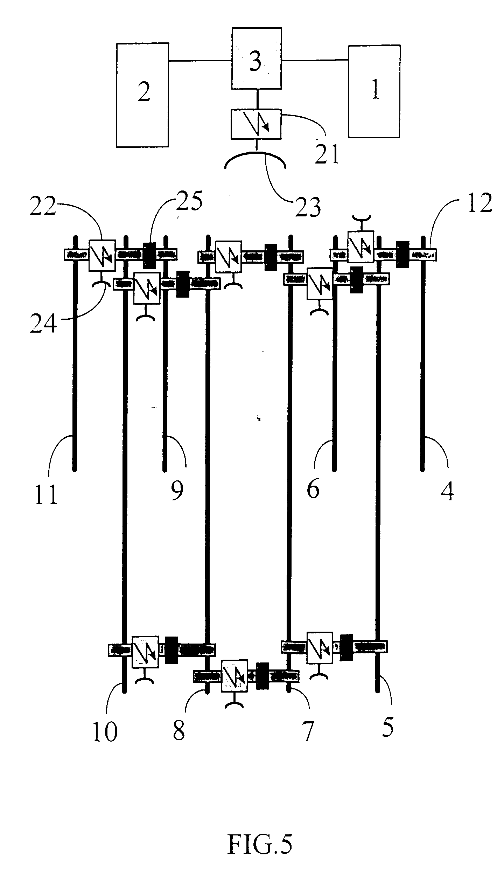

Un quatrième mode de réalisation de l'invention est représenté sur la figure 5. Dans ce mode de réalisation, l'unité de commande et de détection 3 envoie, au moyen d'un émetteur/récepteur 21, relié à une antenne 23, différents signaux qui sont captés par des émetteurs/récepteurs 22, associés à des antennes 24, et montés sur chaque siège arrière 12.

L'alimentation en énergie de chaque siège 12 est réalisée au moyen de piles 25 intégrées à celui-ci. Ce mode de réalisation permet d'éviter toute connexion au niveau des rails 4,5,6,7,8,9,10,11 simplifiant ainsi, grandement l'ensemble de l'installation.

Dans le troisième et quatrième modes de réalisation de l'invention, il est possible d'utiliser une boucle d'antenne, qui peut prendre la forme, par exemple d'un simple fil, reliée à l'émetteur/récepteur 21 situé sur l'unité de commande et de détection 3 et disposée de façon à passer à proximité des différents émetteurs/récepteurs 22 situés sur les sièges 12. Une telle boucle d'antenne permet de limiter les émissions perturbantes ainsi que les perturbations vers les autres systèmes. Cette boucle d'antenne peut être intégrée au niveau des rails 4,5,6,7,8,9,10,11, chaque rail étant équipé d'une boucle ce qui permet de ne pas avoir à gérer le parcours de la boucle d'antenne dans l'habitacle.

Un cinquième mode de réalisation de l'invention peut privilégier, comme dans le quatrième mode de réalisation, l'alimentation et la commande d'un prétentionneur équipant le siège, sans connexion électrique effective entre le siège et le véhicule, tout en évitant l'utilisation de piles montées sur le siège. Ce type d'interconnexion sans contact peut être réalisé par un système de transmission d'énergie par radio fréquence. Dans ce cas, la commande du prétentionneur est réalisée comme dans le troisième et quatrième modes de réalisation, par des émetteurs/récepteurs équipant les sièges et communiquant avec un émetteur/récepteur relié à l'unité de contrôle et de commande. L'alimentation en énergie est réalisée par des antennes disposées le long de certains rails coopérant avec une antenne située sur le siège sans qu'il y ait contact.

Les équipements montés sur le siège peuvent être de nature diverse. Il peut s'agir de prétentionneurs, mais aussi de coussins gonflables déclenchés par l'unité de contrôle et de commande, ou bien de dispositifs de chauffage, de systèmes électrifiés pilotant les mouvements du siège, de systèmes multimédia ou d'éclairage. Dans ce dernier cas, dans les deux premiers modes de réalisation de la présente invention, une des pistes peut consister en un ou plusieurs conducteurs optiques. Toutefois, dans le cinquième mode de réalisation de la présente invention, une alimentation en puissance des équipements montés sur les sièges arrières reste limitée.

La présente invention n'est nullement limitée au mode de réalisation décrit et illustré qui n'a été donné qu'à titre d'exemple. Au contraire, l'invention comprend tous les équivalents techniques des moyens décrits ainsi que leurs combinaisons si celles-ci sont effectuées suivant son esprit.

## Revendications

1. Dispositif pour la transmission de signaux entre une unité de contrôle et de commande (3) d'un véhicule et au moins un équipement monté sur un sous-ensemble (12), tel que notamment un siège (12) démontable de véhicule automobile, de façon à commander ledit équipement appartenant à ce sous-ensemble (12), ledit sous-ensemble (12) étant, en configuration d'utilisation, verrouillé dans deux rails parallèles (4,6,5,7,8,10,9,11) montés sur un élément de structure du véhicule, notamment un plancher, et conformés de manière à autoriser, au moyen d'un mécanisme de verrouillage, l'installation du sous-ensemble (12) en une position quelconque souhaitée le long des rails (4,6,5,7,8,10,9,11), caractérisé en ce qu'il comprend des moyens émetteurs de signaux (13,15,16,21,23) connectés à l'unité de contrôle et de commande (3), des moyens récepteurs de signaux (15,16,22,24) prévus sur le sous-ensemble (12) connectés audit équipement, des moyens d'alimentation (13,15,16,25,26) pour alimenter ledit équipement en énergie, et en ce que la transmission des signaux entre l'unité de contrôle et de commande (3) et l'équipement, et l'alimentation en énergie de l'équipement sont assurées de façon permanente quels que soient les déplacements du sous-ensemble (12) par rapport à l'élément de structure, une fois le sous-ensemble (12) verrouillé sur les rails (4,6,5,7,8,10,9,11).

2. Dispositif selon la revendication 1, caractérisé en ce que les moyens émetteurs de signaux (13,15,16,21,23) et les moyens d'alimentation (13,15,16,25,26) comportent au moins un élément principal de connecteur (13,15,16), et les moyens récepteurs de signaux (15,16,22,24) et les moyens d'alimentation (13,15,16,25,26) comportent au moins un élément complémentaire porté par le sous-ensemble (12), ledit élément principal de connecteur (13,15,16) étant connecté audit élément complémentaire pendant le verrouillage du sous-ensemble (12) sur les rails (4,6,5,7,8,10,9,11).

3. Dispositif selon la revendication 2, caractérisé en ce les moyens émetteurs de signaux (13,15,16,21,23) et les moyens d'alimentation (13,15,16,25,26) comportent au moins plusieurs éléments principaux (13) de connecteur, ledit élément complémentaire étant adapté pour coopérer avec un unique élément principal de connecteur (13), quels que soient les déplacements du sous-ensemble (12) par rapport à l'élément de structure, une fois celui-ci verrouillé sur les rails (4,6,5,7,8,10,9,11).

4. Dispositif selon la revendication 2, caractérisé en ce que l'élément principal de connecteur (15,16) est monté sur au moins l'un des rails (4,6,5,7,8,10,9,11) et s'étend sur toute la longueur de celui-ci.

5. Dispositif selon la revendication 1, caractérisé en ce que les moyens émetteurs de signaux (13,15,16,21,23) comportent un premier émetteur/récepteur de radiofréquences (21) relié à une première antenne (23), et en ce que les moyens récepteurs de signaux (15,16,22,24) comportent un deuxième émetteur/récepteur (22) de radiofréquences, monté sur le sous-ensemble (12), relié à une deuxième antenne (24), et adapté pour échanger des signaux avec ledit premier émetteur/récepteur (21).

6. Dispositif selon la revendication 5, caractérisé en ce que les moyens d'alimentation (13,15,16,25,26) comportent au moins un élément principal de connecteur (15,16) monté sur au moins l'un des rails et s'étendant sur toute la longueur de celui-ci, et un élément complémentaire de connecteur porté par le sous-ensemble (12), ledit élément principal de connecteur (15,16) étant connecté audit élément complémentaire pendant le verrouillage du sous-ensemble (12) sur les rails (4,6,5,7,8,10,9,11).

7. Dispositif selon la revendication 5, caractérisé en ce que les moyens d'alimentation (13,15,16,25,26) comportent une pile (25) montée sur ledit sous-ensemble.

8. Dispositif selon la revendication 1, caractérisé en ce que les moyens d'alimentation (13,15,16,25,26) comportent au moins une troisième antenne principale montée sur au moins l'un des rails (4,6,5,7,8,10,9,11) et s'étendant sur toute la longueur de celui-ci, et une quatrième antenne complémentaire montée sur le sous-ensemble (12), ladite antenne principale coopérant avec ladite antenne secondaire une fois le sous-ensemble verrouillé sur les rails (4,6,5,7,8,10,9,11), et étant adaptée pour transmettre de l'énergie par voie des radiofréquences, à ladite antenne secondaire.
